# EUROPEAN PATENT APPLICATION

(11) **EP 2 159 572 A1**
(43) Date of publication of application: **03.03.2010**
(21) Application number: 08775402.4
(22) Date of filing: 27.05.2008
(51) Int. Cl.: G01N 27/333

(54) **ELECTRODES SELECTIVE FOR SOLID-CONTACT IONS BASED ON CARBON NANOTUBES**

(30) Priority: 29.05.2007 ES 200701468
(71) Applicant: Universitat Rovira I Virgili, 43003 Tarragona (ES)
(72) Inventor: RIUS FERRUS, Francesc, Xavier, E-43003 Tarragona (ES); MACHOAPARICIO, Santiago, E-43003 Tarragona (ES); CRESPO PARAVANO, Gaston, Adrian, E-43003 Tarragona (ES); RIU RUSELL, Jordi, E-43003 Tarragona (ES)
(74) Representative: Carpintero Lopez, Francisco
(86) International application number: PCT/ES2008/000374
(87) International publication number: WO 2008/145787

(57) **Abstract**

The invention defines an all-solid-contact ISE which comprises a transducer layer of carbon nanotubes which brings the sensing layer and conducting element into contact. The invention also defines a method for the preparation of said all-solid-contact ISE and the use of the same for the qualitative, quantitative or semi-quantitative analysis of analytes. Said all-solid-contact ISE makes it possible to detect or quantify highly diverse chemical species in a reliable and reproducible manner, with the added advantages derived from its simplicity and low construction cost.

## Description

### FIELD OF THE INVENTION

The invention is within the field of electrochemistry, and in particular, is related to electrochemical sensors based on all-solid-contact ion-selective electrodes. Specifically, the invention refers to an all-solid-contact ion-selective electrode based on carbon nanotubes. Said electrode permits qualitative, quantitative or semi-quantitative analysis of highly diverse analytes, with good reproducibility and reliability.

### BACKGROUND OF THE INVENTION

It is widely known within the state-of-the-art that ion-selective electrodes or ISEs have been used for qualitative or quantitative analysis of various analytes, despite initially being employed to analyse the concentration of ions in solutions. The traditional configuration includes an internal transducer solution between the ion-selective membrane and the conducting element of the electrical signal generated, which is capable of transforming the ionic flow into electronic flow (Eric Bakker, Ernö Pretsch, Trends in Analytical Chemistry, 24 (2005) 199-207 "Potentiometric sensors for trace-level analysis"). However, this configuration is not suitable for certain applications, in particular miniaturised electrodes, and for this reason the internal solution has been replaced with a solid contact, giving rise to the development of all-solid-contact ISEs or all-solid-state ISEs.

As a result, the new generation of ion-selective electrodes will probably be constructed using a solid internal contact. This is due to the clear advantages in terms of the possibilities of much simpler miniaturisation and construction offered by these all-solid-contact potentiometric electrodes, over the ones which contain an internal solution (Pretsch E., TrAC 26 (2007) 46-51, "The new wave of ion-selective electrodes").

In some cases, the ion-selective membrane has been deposited directly over the conducting element, as is the case with the Coated-Wire Electrode or CWE, despite the response being somewhat unstable and the reduced adherence of the membrane to the metal. In other cases, the ion-selective membrane has been placed in contact with the conducting element via a Conducting Polymer or CP layer. This polymer layer acts as an internal transducer, converting the ionic flow into electronic flow. Polypyrrols, polythiophenes or polyanilines, among others, have been employed as conducting polymers, being suitably doped, for example polypyrrol doped with chloride anions, or polypyrrol doped with ferrocyanide anions (Agata J. Michalska, Charles Appaih-Kusi, Lee Yook Heng, Sebastian Walkiewicz and Elizabeth A. H. Hall, Anal. Chem. 76 (2004) 2031-2039, "An Experimental Study of Membrane Materials and Inner Contacting Layers for Ion-Selective K+ Electrodes with a Stable Response and Good Dynamic Range").

In spite of the fact that conducting polymers used as transducers between the ion-selective external membrane and the conducting element of the electrical signal generated improve the stability of the all-solid-contact electrodes, a process of optimising the doping of the conducting polymer is still required for each individual application in order to maximise the transduction of the ionic current to electronic current (Bobacka, J. Electroanalysis 18(2006) 7-18, "Conducting polymer-based solid-state ion selective electrodes"; Michalska, A., Anal. Bioanal. Chem. 384 (2006) 391-406, "Optimizing the analytical performance and construction ISEs with conducting polymer-based ion-to-electron transducers").

In the state-of-the-art, there is still a need for new solid contact ISEs that will overcome the shortcomings of the state-of-the-art.

The present inventors have discovered that employing a layer based on carbon nanotubes (CNTs) as an internal transducer, which places the sensing layer (ion-selective membrane or other) into contact with the conducting element, produces an all-solid-contact ISE which offers excellent advantages with regard to the qualitative or quantitative analysis of very diverse chemical species with low levels of detection, with low response times and great selectivity, in other words, with good reliability and reproducibility. These new all-solid-contact ISEs are also very simple to develop and their cost is therefore very reasonable.

In the state-of-the-art, carbon nanotubes are known for their extraordinary properties, derived from their chemical structure. With regard to the field of electrochemical sensors, some of their most interesting characteristics are the very high ratio between surface and volume and their great capacity to promote the transfer of electrical charges between heterogeneous phases (Davis et al., J. Electroanal. Chem. 1997, 440, 279-282; Luo et al., Anal. Chem. 2001, 73, 915-920; Britto et al., AdV. Mater. 1999, 11 (2), 154-157). By employing these properties, CNTs have been used as Field Effect Transistors (FETs) (Postma HWCh, Science 293 (2001) 76-79, "CNT single-electron transistors at room temperature"), capacitors (Snow ES, Science, 307(2005) 1942-5, "Chemical detection with a single-walled carbon nanotube capacitor") and nanoelectrodes in series, which have been applied to voltamperometric analysis (Tu Y, Electroanalysis, 17 (2005) 79-84, "Carbon Nanotubes Based Nanoelectrode. Arrays Fabrication"). Furthermore, US patent application 2006/0200044 describes a carbon nanotube microelectrode in non-potentiometric techniques to measure glucose levels, and in US patent application 2004/0146863 carbon nanotubes are employed as a conducting material for conventional biosensor electrodes used in the detection and quantification of analytes adopting potentiometric techniques.

However, to date nobody has used CNTs as transducers in potentiometric analysis.

Kaempgen et al. (Kaempgen M., Roth S., J Electroanal. Chem 586 (2006) 72-76, "Transparent and flexible carbon nanotube/polyaniline pH sensors") included CNTs as components of pH electrodes; however, as the authors themselves clearly indicate, the carbon nanotubes are employed as a support structure of the conducting polymer layer (polyaniline), which acts simultaneously as a sensing layer, given that the oxonium ions interact with the amino groups of the polyaniline, and as a transducer layer, thanks to its properties as a conducting polymer. Consequently, it would be unexpected for CNTs to be employed as internal transducer layers in highly diverse all-solid-contact ISEs which are able to efficiently convert the chemical signal originating from the sensing layer (of various characteristics according to the analyte to be detected or quantified) into an electrical signal that can be measured.

However, the present inventors have demonstrated for the first time that CNTs may act as highly active transducers in diverse all-solid-contact ISEs **characterised in that** the transduction of the chemical signal from the corresponding sensing layer towards the conducting element was achieved by including an intermediate layer based on carbon nanotubes.

Consequently, the invention offers an alternative all-solid-contact ISE which makes it possible to detect or quantify highly diverse chemical species in a reliable and reproducible manner, with the added advantages derived from its simplicity and low construction cost.

### OBJECT OF THE INVENTION

The present invention, therefore, aims to offer an all-solid-contact ISE which comprises a transducer layer of carbon nanotubes which brings the sensing layer and conducting element into contact.

Another aim of the invention is to provide a method for the preparation of this all-solid-contact ISE.

The final aim of the invention is to provide the use of this all-solid-contact ISE for the qualitative, quantitative or semi-quantitative analysis of analytes.

### DESCRIPTION OF THE FIGURES

Figure 1 a shows the transducer layer of the all-solid-contact ISE of the invention made up of several carbon nanotubes in the form of a "lawn" or "spaghetti" type network. Figure 1b shows the transducer layer of the all-solid-contact ISE of the invention made up of several carbon nanotubes in the form of a "brush" type perpendicular network.
Figure 2 shows a Single-walled carbon nanotube (SWCNT) and a Multi-walled carbon nanotube (MWNT) that may form the transducer layer of the all-solid-contact ISE of the invention.
Figure 3 shows an AFM (atomic force microscopy) image of the network of nanotubes employed as the transducer layer in an all-solid-contact ISE of the invention.
The figure 4 shows three possible configurations of the all-solid-contact ISE of the invention including various substrates.
Figure 5 shows the potentiometric response (electromotive force, EMF = voltage at zero current) of an all-solid-contact ISE of the invention against the logarithm of potassium ion activity.

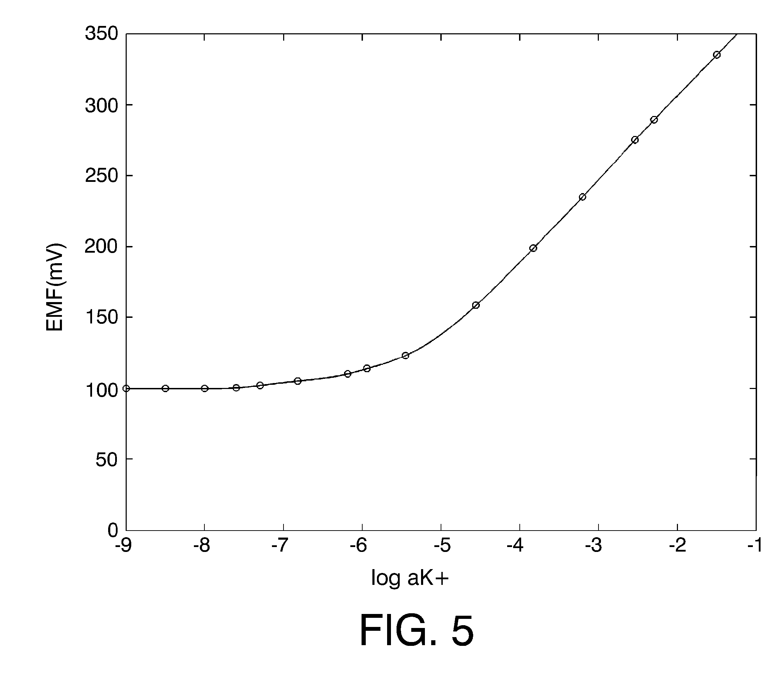

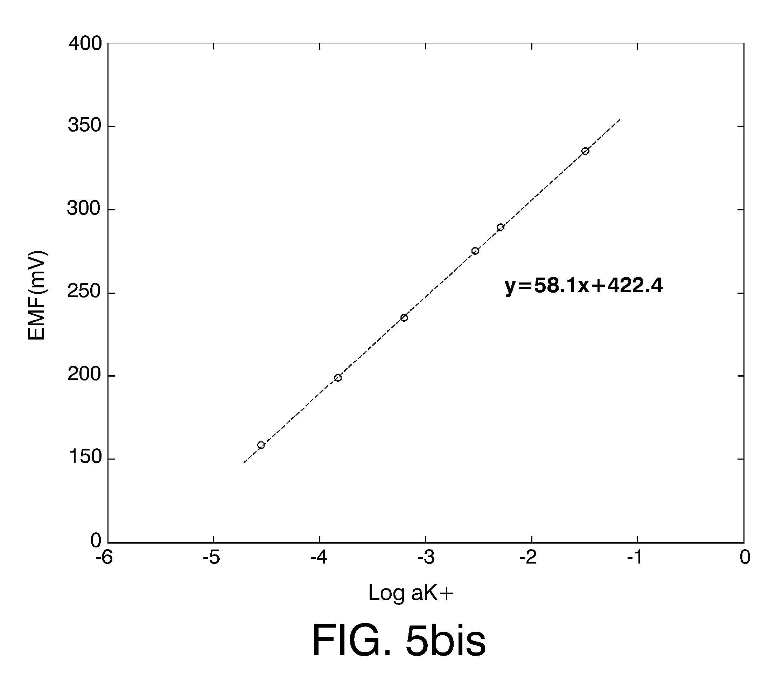

Figure 5bis shows the potentiometric response (electromotive force, EMF = voltage at zero current) of an all-solid-contact ISE of the invention against the logarithm of potassium ion activity in a range of potassium ion activity (between -4.5 and -1.5).

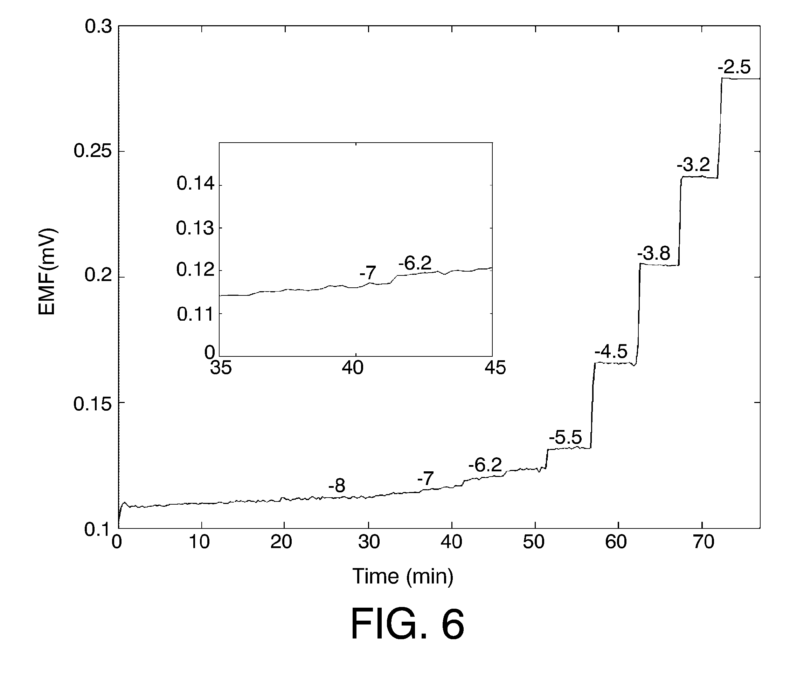

Figure 6 shows the potentiometric response (electromotive force, EMF = voltage at zero current) of an all-solid-contact ISE of the invention against time.

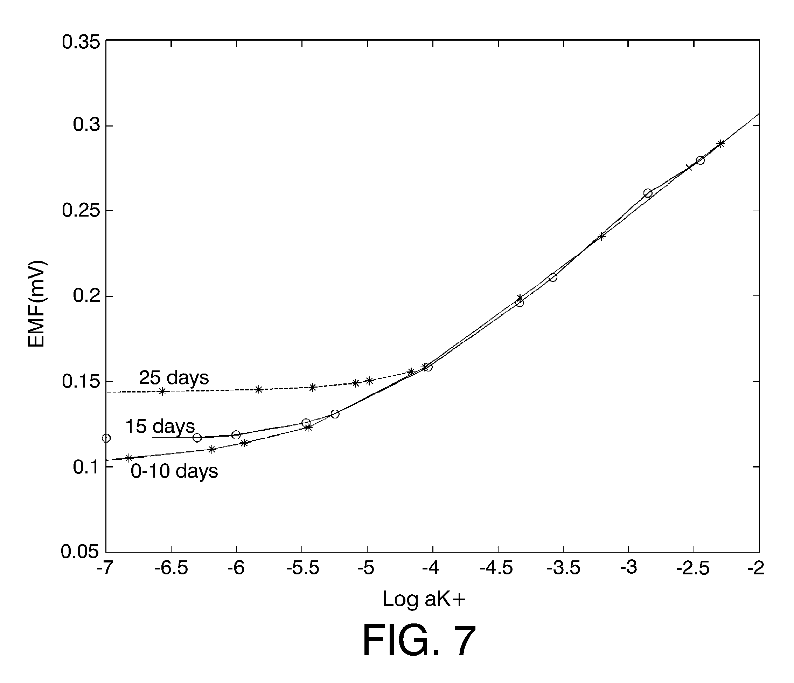

Figure 7 shows the potentiometric response (electromotive force, EMF = voltage at zero current) of an all-solid-contact ISE of the invention for different activities of K⁺ taken over time.

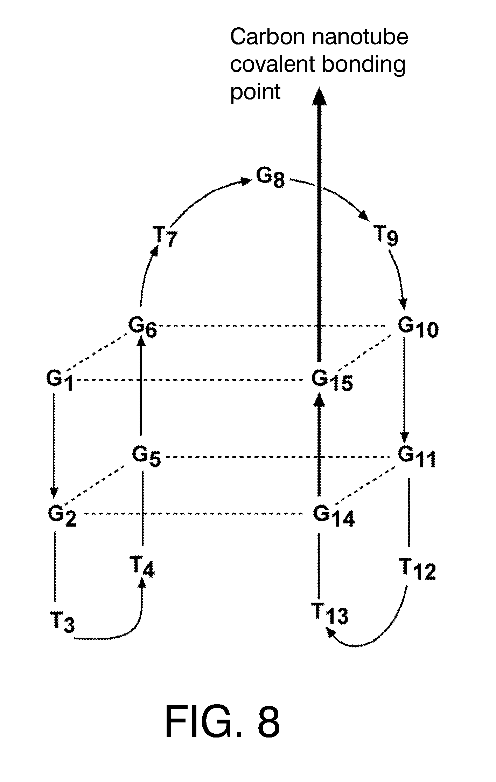

Figure 8 shows the α-thrombin 15-mer aptamer used in the sensing layer of an all-solid-contact ISE of the invention.

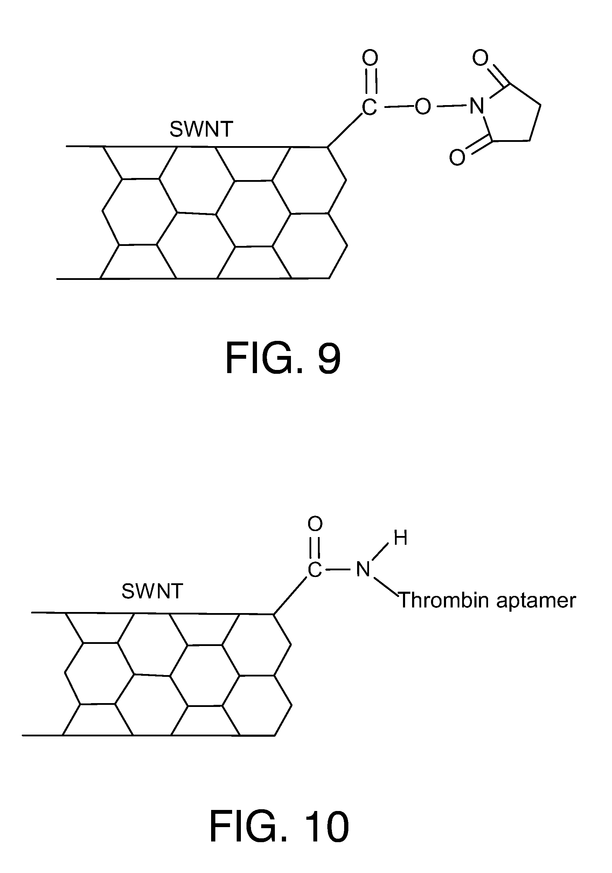

Figure 9 shows a single-walled carbon nanotube (SWCNT) functionalised with a carboxyl group and activated with EDC (1-Ethyl-3-[3-dimethylaminopropyl]carbodiimide Hydrochloride) of the all-solid-contact ISE of the invention.
Figure 10 shows a single-walled carbon nanotube (SWCNT) bonded covalently to the selective aptamer for the (α-thrombin) of an all-solid-contact ISE of the invention.

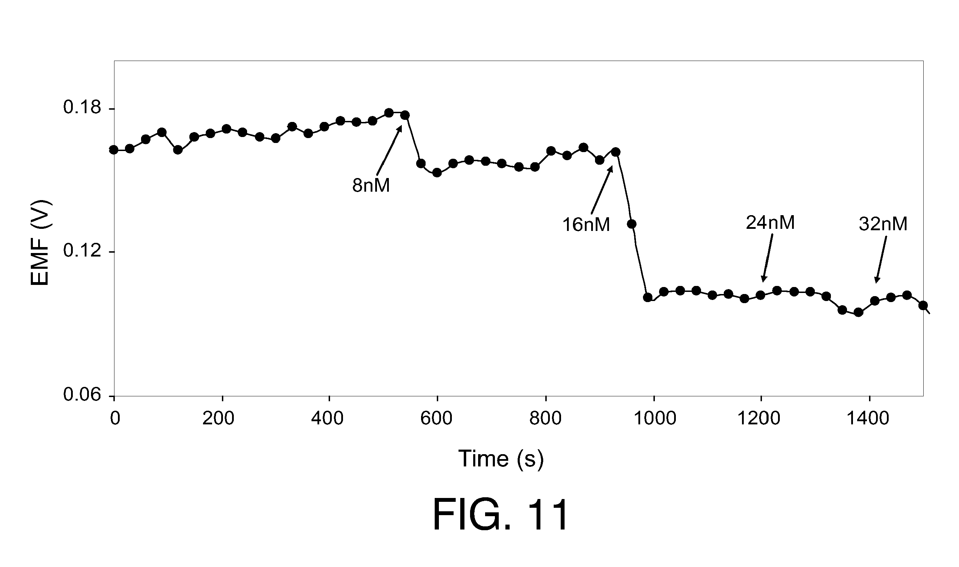

Figure 11 shows the potentiometric response (electromotive force, EMF = voltage at zero current) of an all-solid-contact ISE of the invention for different concentrations of thrombin over time.

### DETAILED DESCRIPTION OF THE INVENTION

The present invention provides an all-solid-contact ISE which comprises a transducer layer of carbon nanotubes which brings the sensing layer and conducting element into contact, hereinafter referred to as the "invention electrode".

As indicated above, the term ion-selective electrode or ISE was established for historical reasons given that the initial electrodes only had the capacity to recognise ions via the intervention of forces **characterised in that** electrical charges intervened. However, nowadays such devices recognise many more types of ions or molecules (see, for example, Bakker E. et al., Chem Rev. 97 (1997) 3083).

Consequently, in the context of the invention the term "all-solid-contact ion-selective electrode" refers to all-solid-contact electrodes which are selective to various analytes such as inorganic cations (of alkaline metals, earth-alkalines, transition metals, etc.), inorganic anions (carbonates, tiocyanates, nitrites, hydroxyls, phosphates, sulfates, sulphites, chlorides, etc.), organic cations (phenylethylamine, naphtylethylamine, ephedrine, amphetamine, propanolol, etc.), organic anions (salicylate, phthalate, maleate, etc.), neutral analytes (carbon dioxide, ammonia, etc.), low molecular weight organic molecules (pesticides, fungicides, sugars, vitamins, segments of nucleic acids, etc.), high molecular weight organic molecules (proteins, polysaccharides, enzymes, antibodies, etc.) or cells (virus, bacteria, fungi, etc.).

As indicated above, carbon nanotubes are responsible for the transduction of the signal. Therefore they convert the chemical recognition event which occurs in the sensing layer into an electrical signal, which is transmitted towards the external device via the conducting element. The conducting element is made up of a solid material characterised for having a very high electrical conductivity. The most typical examples are metallic conductors (wire or cable made of copper, platinum or other metals), although organic conductors such as graphite or conducting polymers are also used. This conducting element is joined to the transducer layer of nanotubes by direct contact or by an adhesive element (also a conductor) as composite conductors (Ag/AgCl and others). The electrical signal generated is therefore an electromotive force, in other words, a potential(compared to another electrode of reference) which is measured in an electrometer with a high internal impedance in the absence of significant electrical current.

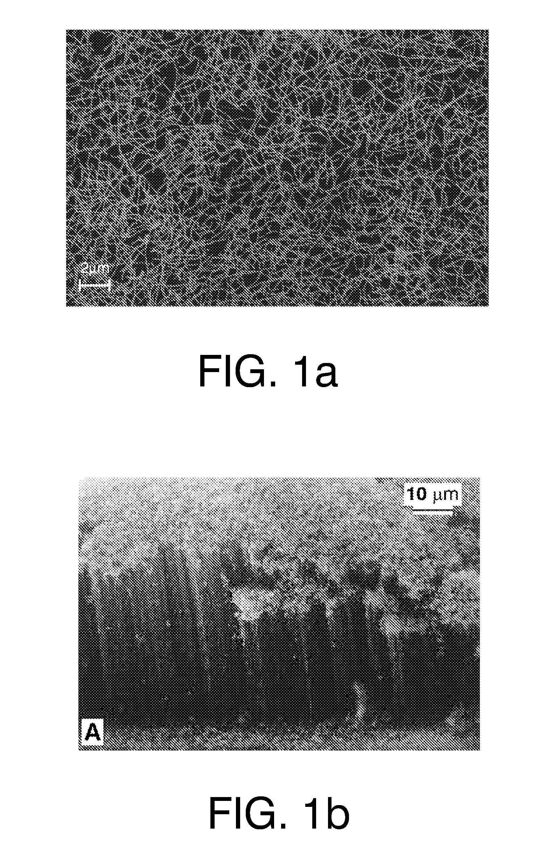

In a particular embodiment of the invention electrode, the transducer layer of carbon nanotubes is formed by one or more carbon nanotubes. When it is formed by several carbon nanotubes, these may take the form of a "lawn" or "spaghetti" network **(****Figure 1a****),** or a perpendicular "brush" network **(****Figure 1 b)** or other arrangements.

Furthermore, carbon nanotubes may be of various lengths and diameters. In addition, their chirality may vary, resulting in non-conducting, semi-conductor or metallic nanotubes. Also, carbon nanotubes may or may not be functionalised with other atoms, molecules, nanoparticles or other components.

In another particular embodiment of the invention electrode, the carbon nanotubes of the transducer layer are selected from single-walled carbon nanotubes and multi-walled carbon nanotubes.

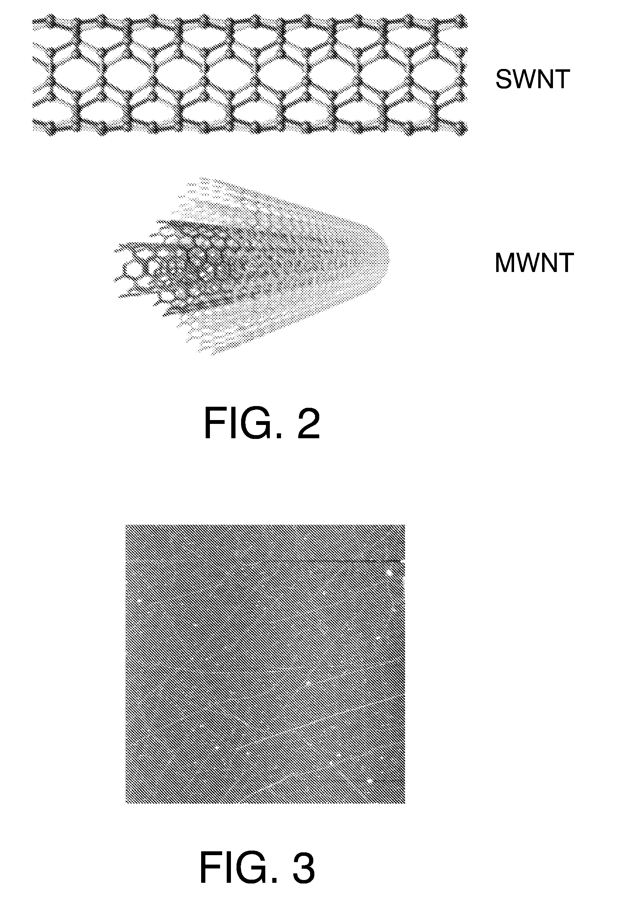

Single-walled carbon nanotubes (SWCNT) are cylinders which consist of a rolled-up single graphite layer with a diameter of between less than 1 nm and 3 nm and up to several micrometres long. Multi-walled carbon nanotubes (MWCNT) are formed by several concentric single-walled carbon nanotubes, and are of varied diameter. **Figure 2** shows a representation of such single-walled and multi-walled nanotubes.

The invention electrode may also use carbon nanotubes of other structural characteristics, such as bamboo-type carbon nanotubes.

In a particular embodiment of the invention electrode, the transducer layer of carbon nanotubes has a thickness of between 1.5 nm and 50 µm. In a preferred embodiment, the transducer layer of carbon nanotubes has a thickness of between 1 µm and 30 µm. In a more preferred embodiment, the transducer layer of carbon nanotubes has a thickness of 15 µm.

What is more, the sensing layer of the invention electrode may be formed by various constituent parts and shall be selected by the expert, depending on the desired application. Thus, for the sensing layer it is possible to employ a membrane, of solid crystal or polymeric, selective to ions or other analytes, which coats the transducer layer and contains within the chemical species that are able to recognise the analytes (occasionally also referred to as ionophores or ion carriers). Numerous examples formed by pairs of species are described in the bibliography: recognition molecule-molecule or ion to be analysed, allowing the expert in the field to select a suitable ionophore for each application. The most common type is one that contains an ionophore, such as valinomycin, which is used to analyse potassium, since this molecule is capable of forming a selective complex with the potassium ion. With regard to the matrix of the ion-selective membrane, this may be poly(vinyl chloride) (PVC), or a derivative of acrylic acid, such as n-butyl acrylate (n-BA) or methyl methacrylate-dimethyl methacrylate (MMA-DMA).

The sensing layer may also be formed by gels which include in their structure the chemical species that are able to recognise the desired analytes, trapped in their matrix by a method known as "entrapment". Many types of gels are employed, but the most common is formed by hydrolysis of the metallic alkoxide (Si-OR) when mixing it with water. The process is described by the following reactions:

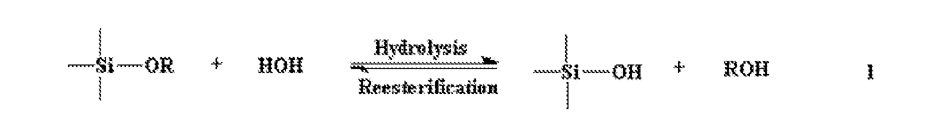

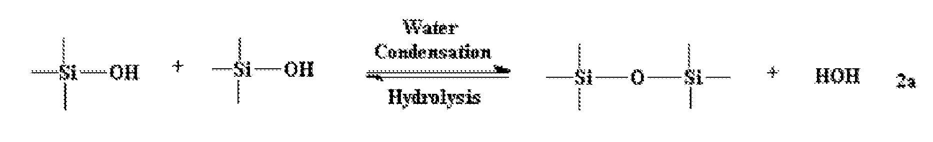

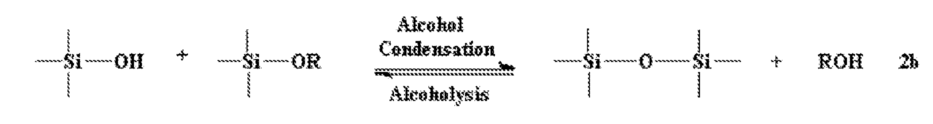

In phase 1 the alkoxide reacts with the water (hydrolysis) to produce the alcohol group linked to the Si atom (sylanol) and the base (ROH). In phase 2a the adjacent sylanol groups condense to form the polymer (gel) with a structural unity of -Si-O-Si-. In phase 2b the sylanol group may also interact with an initial alkoxide to form the gel in phase 2.

Given the porous nature of the matrix, which has the appearance of gelatine, the "entrapped" sensor species remain accessible and may interact with the chemical species to be analysed in the test sample. For example, it is possible to analyse carbamates by employing as a recognition element of the same the enzyme acetylcholinesterase (Bucur B. et al., Anal. Chim. Acta 562 (2006) 115-121 "Biosensors based on highly sensitive acetylcholinesterases for enhanced carbamate insecticides detection").

Similarly, the sensing layer may be formed by semi-permeable membranes which enclose or encapsulate the analyte recognition species, in other words, which do not contain the recognition species at their core, but which merely act by encasing them. Such semi-permeable membranes are of the type employed in dialysis (cellulose acetate) or made using Teflon (selective to certain gases), Nafion, polyurethanes or polycarbonates, for example. This was the original technique used to develop the first glucose biosensor with an encapsulating membrane deposited over the oxygen electrode.

The sensing layer may also be made up of chemical analytes recognition elements adsorbed over the carbon nanotubes by means of weak chemical bonds of the van deer Waals or other type (hydrophobic forces, hydrogen bonds, etc.), either directly or indirectly (bonded to other compounds which are adsorbed over the carbon nanotubes). A very common example is immunoglobulins, proteins which act as antibodies and which adsorb strongly over the surfaces of the carbon nanotubes. Once adsorbed, they are capable of recognising the desired analyte (in biochemical terms, the antigen) which may be another protein, a bacteria, a virus, etc., through the recognition reaction of the corresponding antigen-antibody.

Alternatively, the sensing layer may be made up of chemical analytes recognition elements linked by covalent bonds to the carbon nanotubes themselves, either through direct covalent bonds or through so-called "crosslinkers". An example of this is the functionalisation of nanotubes with carboxyl groups through oxidisation, groups which may react chemically with other molecules until forming a covalent bond with the sensing molecule, for example an aptamer selective to an analyte. Aptamers are small oligonucleotides of RNA or DNA which normally contain fewer than 100 bases. The wide variety of possible arrangements of basic units (phosphate - sugar - purine or pyrimidine base) in the chain of oligonucleotides, together with the high number of tridimensional forms which they may adopt, are characteristics which allow the aptamers to bond very selectively to the different analytes to be analysed, which may range from ions and small molecules to proteins or complete cells.

Furthermore, nanotubes functionalised with carboxyl may react chemically with other molecules until forming covalent bonds with a sensor molecule, for example, a nanoparticle which is able to recognise analytes with thiol groups (-SH) or other types of analytes of interest (Katz, ChemPhysChem, 2004, 5, 1084-1104, "Biomolecule-functionalized CNTs"):

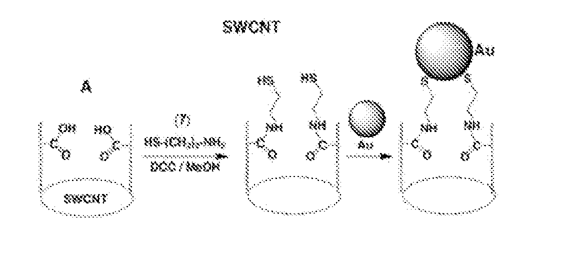

Finally, they may be employed sensing layers formed by chemical entities which are able to recognise analytes of interest and which, in turn, are in direct or indirect contact (for example, through interposed membranes) with the carbon nanotubes, such as Molecular Imprinted Polymers (MIPs), aptamers, segments of DNA or RNA or others. In cases where these recognition elements are placed very close to the carbon nanotubes via interposed membranes, the CNTs are coated with a very thin polymer membrane (such as Parylene) which possesses functional groups through which they are bonded to the MIPs or segments of DNA, for example.

Thus, in a particular embodiment of the invention electrode, the sensing layer is selected from an ion-selective membrane, a gel with an analyte recognition element entrapped in its matrix, a semi-permeable membrane with an encapsulated analyte recognition element, a layer of analyte recognition elements adsorbed over the carbon nanotubes, a layer of analyte recognition elements covalently bonded to the carbon nanotubes and a layer of analyte recognition elements in contact with the carbon nanotubes through an interposed membrane. In a preferred embodiment, the sensing layer is an ion-selective membrane which contains an ionophore. In a more preferred embodiment, the sensing layer is a potassium ion-selective membrane which contains valinomycin as the ionophore.

In no cases will the sensing layer of the invention electrode be a sensing layer and a transducer at the same time, like the polyaniline layer of Kaempgen (Kaempgen 2006, supra).

In a particular embodiment of the invention electrode, the sensing layer has a thickness of between 0.1 and 1000 µm. In a preferred embodiment, the sensing layer has a thickness of between 1 and 100 µm. In a more preferred embodiment, the sensing layer has a thickness of 50 µm.

In a particular embodiment, the electrode invention also comprises a substrate on which the layer of carbon nanotubes is deposited or which, in the manner of an insulating tube, for example, contains at its end the sensing layer deposited over the transduction layer of carbon nanotubes. This substrate may or may not be a conductor, for example a PVC or SiO₂ substrate, or may have conductor qualities, for example a metal substrate (Pt, Ag, Cu, etc.), or a substrate of vitrificated carbon or another conducting material. These substrates may have diverse geometric forms. Consequently, they may be configured as wires or cables, tubes, fine or thicker layers, or adopt other designs. This substrate is optional, since, in some cases, the carbon nanotubes themselves can act as a substrate, either on their own or by forming part of a composite material.

The total size of the all-solid-contact selective electrode of the invention varies from a macroscopic size (measured in cm or mm) to a nanoscopic size (measured in nm) formed by a single carbon nanotube or several nanotubes, with microscopic sizes (measured in µm) in between. In each case the measurements of the transducer layer of the carbon nanotubes, the sensing layer and, wherever applicable, the substrate, will be adapted.

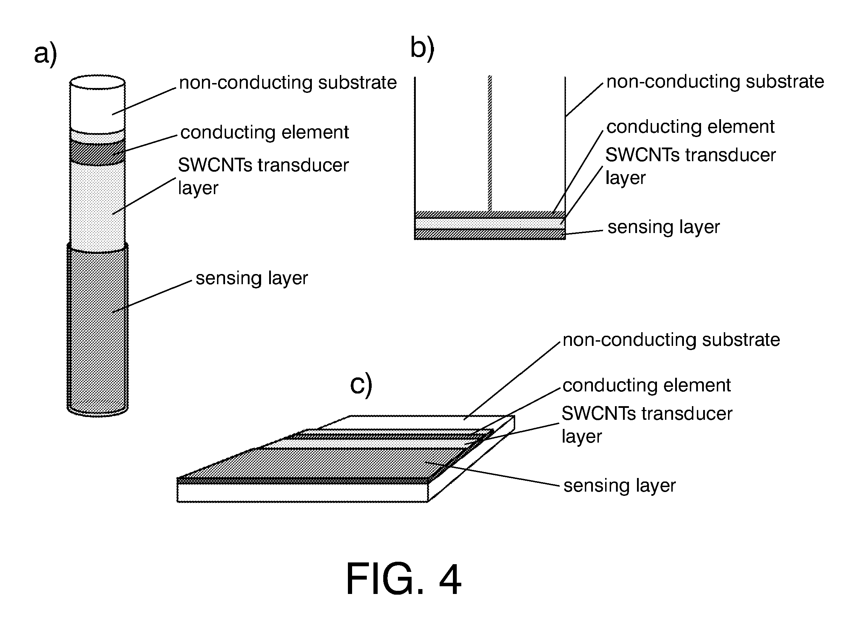

**Figure 4** shows three possible configurations of the invention electrode with a substrate. Figure 4a) shows a cylindrical type non-conducting substrate upon which the transducer layer of carbon nanotubes is deposited, and in turn the sensing layer is deposited on this. Figure 4b) shows a non-conducting substrate in the form of an insulation tube which contains at its end the sensing layer deposited over the transducer layer of carbon nanotubes. Figure 4c) shows a sheet type non-conducting substrate upon which the transducer layer of carbon nanotubes is deposited, and in turn the sensing layer is deposited on this.

In another aspect of the invention, a method will be provided for the preparation of the aforementioned all-solid-contact ISE, which comprises the following stages:
(a) preparing a transducer layer of carbon nanotubes, and
(b) placing the transducer layer prepared in stage (a) in contact with the sensing layer.

In a particular embodiment, in stage (a) of the procedure, the transduction layer will be prepared by powder compaction of the carbon nanotubes.

In cases where the invention electrode comprises a tube type substrate containing at its end the sensing layer deposited over the transducer layer of carbon nanotubes, this will be prepared by firstly attaching a solid disc, which constitutes the conducting element, to the tube end. With the electrode positioned "head down", the carbon nanotubes, which are dispersed in an appropriate solvent (for example, single-walled carbon nanotubes can be dispersed in dimethylformamide), are deposited over this disc. Once the solvent has evaporated, this leaves a layer of cross-linked nanotubes, which constitutes the transducer layer. Finally, this transducer layer is placed in contact with the sensing layer, depositing the latter over the former by depositing droplets of the solution **characterised in that** it is located. Once the solvent of the sensing layer has evaporated, this totally coats the transducer layer, in a manner similar to the way the nanotubes are coated in other electrode designs.

In cases where the invention electrode comprises a substrate upon which the transducer layer of carbon nanotubes is deposited, this layer may be deposited over the substrate by any suitable deposition method.

Thus, in a particular embodiment, in stage (a) of the procedure, the transducer layer will be prepared by coating the substrate with a suspension of carbon nanotubes by aerosol spraying, depositing droplets, immersion or impregnation.

This suspension is prepared, for example, by dispersing carbon nanotube powder in a polar solvent (such as water or ethanol) which includes a surfactant (such as sodium dodecyl sulfate, SDS). Thus, the surfactant surrounds the individual nanotubes and ensures they are well dispersed in the polar media of the solvent. Other dispersion methods use less polar solvents such as xylenes or chlorobencenes. To ensure good dispersion with these latter solvents, sonication, i. e. high frequency vibration, is required so that the nanotubes, which naturally tend to group together, disperse properly.

Carbon nanotube powder may be obtained in the market, examples including the type marketed by the companies Carbon Solutions, Inc., HELIX Material Solutions or NTP; or it can be prepared by Chemical Vapour Deposition (CVD) from methane at a temperature of 900ºC in the presence of a silicon dioxide chip as a catalyst, for example.

In stage (b) of the procedure, the prepared transducer layer is placed in contact with the sensing layer. Thus, the ion-selective membranes are placed in contact with the nanotube layer by impregnation, a method **characterised in that** the structure of the carbon nanotubes, or the substrate coated with a layer of carbon nanotubes, is submerged in the dense solution that contains the membrane dissolved in the appropriate solvent. It is then removed and the membrane which has adhered to it is left to dry. A deposition technique is also used **characterised in that** droplets of this dense solution that contains the membrane are deposited over the nanotube layer.

In the case of gels which contain an analyte recognition element entrapped in their matrix, these are synthesised "in situ". Consequently, the gel forms once its monomer components have been deposited over the transducer layer by impregnation, as indicated above.

The semi-permeable membranes with the analyte recognition elements encapsulated are placed in contact with the transducer layer of carbon nanotubes by deposition on the latter of droplets of the solution which contains the analyte recognition element, which will adsorb itself over the nanotubes, and the subsequent sealing of the whole by fully coating it with the previously prepared semi-permeable membrane.

The recognition elements which are adsorbed over the carbon nanotubes are simply placed in contact with them by submerging the carbon nanotube structure, or the substrate coated with a layer of carbon nanotubes, for example in a solution containing proteins as the recognition element. The forces of weak interaction, such as those of van der Waals or others, ensure that the proteins are adsorbed over the surface of the carbon nanotubes.

The analyte recognition elements are covalently bonded to the carbon nanotubes when they chemically react with the functional groups contained in the nanotubes. For example, submerging the structures of carbon nanotubes functionalised with groups -COOH, or the substrate coated with a layer of nanotubes functionalised with -COOH, in a solution which contains recognition molecules having the amino group. This produces the chemical formation of the amides with which the recognition molecules are bonded in a stable manner to the carbon nanotubes.

In the case of the layer of analyte recognition elements in contact with the carbon nanotubes via an interposed membrane, said membrane is deposited over the carbon nanotubes by "in situ" polymerisation of the monomers, followed by the covalent reaction of the functional group of the membrane with the recognition molecule in a manner similar to the one described in the previous section.

In another aspect of the invention, a use will be provided for the aforementioned all-solid-contact ISE, for the qualitative, quantitative or semi-quantitative analysis of analytes. As indicated previously, such analytes may be inorganic cations or anions, organic cations or anions, neutral analytes, organic molecules with a low molecular weight, organic molecules with a high molecular weight or cells.

In a particular embodiment, the analytes are ions. Thus, said analysis is carried out on ionic species under the conditions that are determined (amphetamine is solely an ion from a determined pH of approximately 9.9, for example). In a preferred embodiment, the analytes are potassium ions.

The following examples illustrate the invention and must not be considered as limiting the scope of the same.

### EXAMPLE 1

### Preparation of an all-solid-contact ISE to analyse potassium with a transducer layer of single-walled carbon nanotubes and a potassium ion-selective membrane.

For the sensing layer, a potassium ion-selective membrane which contains valinomycin as the ionophore was used. The potassium-selective membrane used was constructed according to the procedure described in the scientific literature (L Y Heng and E A.H. Hall, ACA 403 (2000) 77-89, "Methacrylic-acrylic polymers in ion-selective membranes: achieving the right polymer recipe") and contained 1.6% wt (20.1 mmol kg⁻¹) of valinomycin, 0.5% wt (5.1 mmol kg⁻¹) of a lipophylic anion (potassium tetrakis (4-chlorophenyl) borate) (KTCIPB) and 97.9% wt monomer of methyl methacrylate-dimethyl methacrylate, MMA-DMA. 200 mg of this mixture was dissolved into 2 ml of dichloromethane. To prepare the electrodes, a suspension of 1% wt of single-walled carbon nanotubes (SWCNT) in dodecyl sulfate was sprayed in the form of an aerosol (Furtado et al., J. Am. Chem. Soc. 2004, 126, 6095-6105. "Debundling and Dissolution of Single-Walled Carbon Nanotubes in Amide Solvents") over a PVC insulating cable acting as a mechanical substrate (Kaempgen 2006, supra). After washing with abundant quantities of water and drying, we observed a transducer layer formed by a network of nanotubes with an approximate thickness of 15 µm. Figure 3 shows an AFM (atomic force microscopy) image of the network of nanotubes prepared. The selective membrane (with an approximate thickness of 50 µm) was deposited over the network of nanotubes by immersing the PVC cable coated with the nanotube layer in the dichloromethane solution described above. **Figure 4a****)** shows the configuration of the invention electrode prepared. Adopting the same methodology, an electrode without the transducer layer of single-walled carbon nanotubes was prepared as a control electrode.

### EXAMPLE 2

### Analysis of the concentration of potassium ions using the all-solid-contact ISE prepared in example 1.

The electrical potentials were measured at room temperature (22ºC) with continuous agitation. The reference electrode used was a double-junction electrode of Ag/AgCl/3M KCI (Methrom AG model 6.0729.100) containing a solution of LiAcO 1M as a saline bridge. The experiments were conducted in 100 ml glass beakers pre-treated overnight with a solution of HNO₃ 10⁻⁴M. All the electromotive force (EMF) values measured were corrected for the values of the liquid junction potentials measured by the Henderson equation. The activity coefficients were calculated using the Debye-Huckel approximation. An electrometer (Keithley 6514) with high impedance input was used to measure the electromotive force.

### Results and discussion

### Limit of Detection

The electromotive force or EMF (voltage at zero current) of the all-solid-contact ISE prepared in example 1 was measured at various concentrations of potassium ions. The calibration curves (EMF vs logarithm of activity) obtained from successive increments in the activity of ion K⁺ are shown in figures 5 and 5bis.

**Figure 5** shows the potentiometric response of the electrode of example 1 against the activity log of K⁺ ions. The electrode was conditioned for 1 h in 0.01 M KCI and stored in the same solution between each use. The limit of detection or LOD obtained is 10^{-5.5} M. No signal was obtained when the control electrode was used (all-solid-contact ISE without transducer layer of single-walled carbon nanotube or SWCNT).

The limit of detection (LOD) expresses the minimum quantity or concentration of analyte of interest that can be reliably detected by the electrode. The lower the LOD, the greater its reliability. It is calculated using the intersection of the straight-line segments drawn. The electrode prepared in example 1 can detect a minimum concentration of ion K⁺ of 10^{-5.5} M, in other words, it is capable of detecting a concentration of K⁺ ions to the order of tenths of micromoles per litre, comparable to that detected by an all-solid-contact ISE with an internal transducer layer based on a conducting polymer.

**Figure 5bis** shows the potentiometric response of the electrode of example 1 against the logarithm of the activity of the K⁺ ions in one logarithm range of potassium activity (of -4.5 to -1.5). The gradient obtained is (58.1 ± 0.4) mV/decade of activity, which reveals a Nernstian response. It is therefore demonstrated that the electrode provides a response very similar to the theoretical one (59.16 mV/decade of activity) which should be obtained in the detection of an ion with a positive valency of 1 such as K⁺ ion, in other words, the electrode presents good reliability.

### Selectivity

The potentiometric selectivity coefficients K_{JK}^{pot} were measured, where K was the ion of interest (potassium) and J was the ion which could also be detected, constituting an interference in the recorded measure. Said coefficients quantitatively reflect the selectivity or capacity of an electrode to interact with other chemical species other than the analyte of interest.

**Table 1** shows the selectivity coefficients obtained with the all-solid-contact ISE prepared in example 1 and with another electrode which is similar, but with a conducting polymer or CP transducer layer (Michalska, A., Anal Bioanal Chem 384 (2006) 391-406, "Optimizing the analytical performance and construction ISEs with conducting polymer-based ion-to-electron transducers").

**Table 1. Potentiometric selectivity coefficients for the all-solid-contact ISE of example 1 (CNT transducer layer) and for a state-of-the-art electrode (CP transducer layer).**

| **Ion J** | **CNT transducer layer** **log *K*_{KJ}^{pot}** | **CP transducer layer log** ***K*_{KJ}^{pot}** |
|---|---|---|
| **Li⁺** | **-3.9 ± 0.4** | **-4.1** |
| **Na⁺** | **-4.1 ± 0.6** | **-4.2** |
| **NH⁴⁺** | **-2.3 ± 0.2** | **-2.0** |
| **Ca²⁺** | **-5.2 ± 0.7** | **-4.9** |
| **Mg²⁺** | **-5.2 ± 0.4** | **-5.1** |

Selectivity coefficients approximately lower than 10^{-2.5} (log K_{KJ}^{pot} < 2.5) signify that the response of the electrode is not altered by noticeable concentrations of other ions. The all-solid-contact ISE of example 1 therefore displays good selectivity for potassium ions, similar to a state-of-the-art electrode with a conducting polymer transducer layer.

### Response time

The response time was measured, understood as the time from the analyte introduction until a stable response is obtained from the all-solid-contact ISE of example 1. The results are shown in Figure 6 which represents the potentiometric response (electromotive force, EMF = voltage at zero current) obtained from the all-solid-contact ISE of example 1 over time. The inset diagram shows an enlarged image of the range of the selected measure.

As can be observed in Figure 6, at low concentrations of analyte (10⁻⁹-10⁻⁸) the response time was 1 minute. However, at higher concentrations (10⁻⁶-10⁻⁵) the response time is almost immediate, being less than 5 seconds. The response of the electrode prepared in example 1 is therefore very fast, similar to that of the state-of-the art electrode with an internal solution.

### Response stability

The electromotive force or EMF (voltage at zero current) of the all-solid-contact ISE prepared in example 1 was measured over time at various concentrations of potassium ions. The results are shown in Figure 7. The electrode was conditioned for 1 h in 0.01 M KCI and stored in the same solution between each use.

Figure 7 shows the response stability of the invention electrode over time: as the same solution was measured over the days, the response of the electrode altered slightly when very low concentrations were measured. However, for concentrations of potassium equal to or greater than 10⁻⁵ M the response obtained was the same after 22 days. Consequently, the electrode of example 1 displays high response stability over time.

It is therefore possible to conclude that the all-solid-contact ISE prepared in example 1 is reliable and reproducible for concentrations greater than 10^{-5,5} M KCI.

### EXAMPLE 3

### Preparation of an all-solid-contact ISE to analyse thrombin with a transducer layer of single-walled carbon nanotubes and a sensing layer formed by aptamers covalently bonded to the nanotubes.

For the sensing layer, aptamers covalently bonded to the carbon nanotubes of the transducer layer were used. Specifically, we used the selective aptamer of 15 bases (GGTTGGTGTGGTTGG) for the α-thrombin represented in **Figure 8****.** In said Figure 8, it is also possible to observe both the sequence of the basic units and the spatial arrangement and the point through which the aptamer is covalently bonded to the single-walled carbon nanotube.

To manufacture this electrode, the following procedure was adopted:
1. Purification of the SWCNTs following the procedure of Furtado et al. (Furtado et al., 2004, supra) through treatment with HNO₃ 2.6 M for 4h to reflux.
2. A layer of the carboxylated nanotubes (groups -COOH were entered in stage 1 by acid treatment) over a cylindrical type non-conducting PVC substrate (the configuration of 4a). The deposition was performed by spraying the nanotubes dispersed in the aqueous solution containing sodium dodecyl sulfate, adopting the procedure described in the scientific literature (K. Maehashi, T. Katsura, K. Kerman, Y. Takamura, K. Matsumoto and E. Tamiya, Anal. Chem. 79 (2007) 782 -787 "Label-Free Protein Biosensor Based on Aptamer-Modified Carbon Nanotube Field-Effect Transistors"). The nanotubes were washed and dried, and ended up adhered to the PVC substrate.
3. The carboxyl groups were activated in order for them to bond covalently with the 15 base aptamer for the α-thrombin (recognition molecule). For the activation, a carbodiimide type compound, such as EDC (1-Ethyl-3-[3-dimethylaminopropyl] carbodiimide Hydrochloride), was used. To do this, the PVC substrate containing the carboxylated nanotubes was placed in an aqueous solution of EDC, obtaining the functionalised and activated nanotubes shown in **Figure 9****.**
4. The nanotubes activated with EDC were made to react in the aqueous solution (introducing into the solution the PVC substrate with the layer of nanotubes activated over it) with the amino groups of the thrombin-selective aptamer at room temperature, following the diagram shown in the bibliography (Hye-Mi So, Jeong-O Lee et.al., J. Am. Chem. Soc. 127 (2005) 11906-11907 "Single-Walled Carbon Nanotube Biosensors Using Aptamers as Molecular Recognition Elements"), obtaining the nanotubes covalently bonded to the thrombin aptamer (recognition molecule), as shown in **Figure 10**.

### EXAMPLE 4

### Analysis of the concentration of α-thrombin using the all-solid-contact ISE prepared in example 3.

The electrical potentials were measured at room temperature (22ºC) with continuous agitation. The reference electrode used was a double-junction electrode of Ag/AgCl/3M KCI (Methrom AG model 6.0729.100) containing a solution of LiAcO 1 M as a saline bridge. The experiments were conducted in 100 ml glass beakers pre-treated overnight with a solution of HNO₃ 10⁻⁴M. All the electromotive force (EMF) values measured were corrected for the values of the liquid junction potentials measured by the Henderson equation. The activity coefficients were calculated using the Debye-Huckel approximation. An electrometer (Keithley 6514) with high impedance input was used to measure the electromotive force.

### Results and discussion

### Detection of α-thrombin

The electromotive force or EMF (voltage at zero current) of the all-solid-contact ISE prepared in example 3 was measured over time at various concentrations of α-thrombin. The results are shown in **Figure 11****.** To do this, the electrode was first submerged in a phosphate buffer solution corresponding to the physiological pH (pH = 7.4) and it was observed that the electromotive force provided by the constructed electrode remained constant. After 9 minutes, we added to this solution a solution of α-thrombin dissolved in a phosphate buffer in order to make the total concentration of the solution 8 nM. A noticeable change of response was observed, which stabilised in less than 1 minute. This operation was repeated with α-thrombin concentrations of 16, 24 and 32 nM. In **Figure 11****,** it can be observed that the electrode responded correctly to the different concentrations of the analyte selected until all the aptamers reacted with the thrombin, resulting in the saturation of the electrode. Consequently, the electrode of example 3 is useful for calculating concentrations of thrombin to the same order of magnitude as that found in the blood.

## Claims

1. An all-solid-contact ISE **characterised in that** it comprises a transducer layer of carbon nanotubes which brings the sensing layer and conducting element into contact.

2. An electrode according to claim 1, **characterised in that** the transducer layer of carbon nanotubes is formed by one or more carbon nanotubes.

3. An electrode according to claim 2, **characterised in that** the carbon nanotubes are selected from single-walled carbon nanotubes and multi-walled carbon nanotubes.

4. An electrode according to claim 1, **characterised in that** the transducer layer of carbon nanotubes has a thickness of between 1.5 nm and 50 µm.

5. An electrode according to claim 4, **characterised in that** the transducer layer of carbon nanotubes has a thickness of between 1 µm and 30 µm.

6. An electrode according to claim 5, **characterised in that** the transducer layer of carbon nanotubes has a thickness of 15 µm.

7. An electrode according to claim 1, **characterised in that** the sensing layer is selected from an ion-selective membrane, a gel with an analyte recognition element entrapped in its matrix, a semi-permeable membrane with an encapsulated analyte recognition element, a layer of analyte recognition elements adsorbed over the carbon nanotubes, a layer of analyte recognition elements covalently bonded to the carbon nanotubes and a layer of analyte recognition elements in contact with the carbon nanotubes through an interposed membrane.

8. An electrode according to claim 7, **characterised in that** the sensing layer is an ion-selective membrane.

9. An electrode according to claim 8, **characterised in that** the sensing layer is a potassium ion-selective membrane.

10. An electrode according to claim 1, **characterised in that** the sensing layer has a thickness of between 0.1 and 1000 µm.

11. An electrode according to claim 10, **characterised in that** the sensing layer has a thickness of between 1 and 100 µm.

12. An electrode according to claim 11, **characterised in that** the sensing layer has a thickness of 50 µm.

13. An electrode according to claim 1, **characterised in that** it comprises a substrate.

14. An electrode according to claim 13, **characterised in that** said substrate is a conducting substrate.

15. An electrode according to claim 13, **characterised in that** said substrate is a non-conducting substrate.

16. Method for the preparation of an all-solid-contact ISE according to claims 1-15, **characterised in that** it comprises:
(a) preparing a transducer layer of carbon nanotubes, and
(b) placing the transducer layer prepared in stage (a) in contact with the sensing layer.

17. Method according to claim 16, **characterised in that in** stage (a) the transducer layer is prepared by coating the substrate with a suspension of carbon nanotubes by aerosol spraying, depositing droplets, immersion or impregnation.

18. Method according to claim 16, **characterised in that in** stage (a) the transducer layer is prepared by powder compaction of the carbon nanotubes.

19. Use of the all-solid-contact ISE according to claims 1-15 for the qualitative, quantitative or semi-quantitative analysis of analytes.

20. Use according to claim 19, **characterised in that** the analytes are ions.

21. Use according to claim 20, **characterised in that** the analytes are potassium ions.
